# EUROPÄISCHE PATENTSCHRIFT

(11) **EP 2 321 169 B1**
(45) Veröffentlichungstag und Bekanntmachung des Hinweises auf die Patenterteilung: **23.01.2013**
(21) Anmeldenummer: 09781629.2
(22) Anmeldetag: 07.08.2009
(51) Int. Cl.: B62D 21/15, B60R 19/34, F16F 7/12

(54) **STRUKTUR ZUM ABSORBIEREN VON ENERGIE**
STRUCTURE FOR ABSORBING ENERGY
STRUCTURE DESTINÉE À ABSORBER L ÉNERGIE

(30) Priorität: 07.08.2008 EP 08162025
(43) Veröffentlichungstag der Anmeldung: 18.05.2011
(73) Patentinhaber: BASF SE, 67056 Ludwigshafen (DE)
(72) Erfinder: WUEST, Andreas, 64673 Zwingenberg (DE); GLASER, Stefan, 67105 Schifferstadt (DE); FERTIG, Daniel, 64646 Heppenheim (DE); HENSEL, Torsten, 64625 Bensheim (DE); GLEITER, Uwe, 67434 Neustadt (DE)
(86) Internationale Anmeldenummer: PCT/EP2009/060295
(87) Internationale Veröffentlichungsnummer: WO 2010/015711

(56) Entgegenhaltungen:
- EP-A- 1 065 108
- EP-A- 1 316 409
- EP-A- 1 398 224
- EP-A- 1 623 881
- EP-A- 1 927 514
- DE-A1- 4 209 826
- DE-A1- 10 239 919
- DE-A1-102006 022 503
- US-A1- 2002 063 433

## Beschreibung

Die Erfindung betrifft eine Struktur zum Absorbieren von Energie von darauf auftreffenden Stößen, wobei die Struktur durch einen Stoß plastisch deformierbar ist und gegebenenfalls zumindest teilweise zerstört werden kann.

Strukturen zum Absorbieren der Energie von darauf auftreffenden Stößen finden zum Beispiel Anwendungen als sogenannte Crash-Absorber in Kraftfahrzeugen. Diese sind im Allgemeinen zwischen dem Fahrzeugrahmen und einem Stoßfängerquerträger montiert. Bei einem Stoß verformen die Crash-Absorber und nehmen dadurch irreversibel Energie auf. Durch die Aufnahme der Energie durch die Zerstörung der Crash-Absorber können kostenintensive Reparaturen an strukturell wichtigen Fahrzeugteilen vermieden werden, wenn nur kleinere Energiemengen aufgenommen werden müssen.

Als Strukturen zum Absorbieren von Energie, die in Form von Crash-Absorbern in Kraftfahrzeugen eingesetzt werden, sind üblicherweise Crash-Boxen aus Stahl im Einsatz. Diese weisen zum Beispiel eine Struktur auf, wie sie in EP-A 1 477 371 dargestellt ist und die beim Auftreffen eines Stoßes deformiert wird.

EP-A- 1 623 881 offenbart eine Struktur zum Absorbieren von Energie nach dem Oberbegriff des Anspruchs 1.

Im Zuge der Kraftstoffeinsparung ist es jedoch gewünscht, Bauteile des Fahrzeuges in niedrigem Gewicht auszuführen. Aus diesem Grund werden auch für die Crash-Boxen alternative Materialien, die ein geringeres Gewicht als Stahl aufweisen, gewünscht. So ist zum Beispiel aus WO-A 2007/147996 bekannt, Crash-Absorber aus einem Kunststoff zu fertigen. Üblicherweise wird hierbei ein faserverstärkter Kunststoff eingesetzt. Die offenbarte Absorberstruktur umfasst zwei mit Rippen verstärkte Träger, die durch eine Platte miteinander verbunden sind. Zur Verstärkung sind dabei in dem Träger Querrippen vorgesehen, wobei jeweils zwischen zwei Querrippen eine kreuzförmige Rippenstruktur aufgenommen ist.

Nachteil einer solchen Struktur ist jedoch, dass bei einem in axialer Richtung auftreffenden Stoß ein schrittweises Absorbieren erfolgt, indem jeweils durch Energieeintrag ein Brechen erfolgt bis zum Erreichen der nächsten Querrippe, dann erneut ein Energieeintrag notwendig ist bis wiederum genug Energie eingebracht ist, die zu einer Zerstörung bis zur nächsten Querrippe ausreichend ist. Ein kontrolliertes, beherrschbares Versagen des Trägers ist auf diese Weise jedoch nicht möglich.

Zur Aufnahme von höheren Energiemengen eignen sich insbesondere Endlosfaserverstärkte Bauteile, die aber relativ teuer in der Herstellung sind. Im Gegensatz dazu werden kurzglasfaserverstärkte Kunststoffe im Allgemeinen nur als sekundäre Elemente mit relativ kurzen Baulängen eingesetzt. Im Allgemeinen werden diese als kombinierte zylinderförmige Domstrukturen oder mit ähnlicher verrippter Gestaltung ausgeführt und aufgrund der Gefahr des Ausknickens auch nur in relativ kurzer Baulänge.

Aufgabe der vorliegenden Erfindung ist es, eine Struktur zum Absorbieren der Energie von darauf auftreffenden Stößen bereitzustellen, die aus einem Polymermaterial gefertigt ist, wobei die Struktur derart ausgebildet ist, dass durch ein beherrschbares kontrolliertes Versagen eine gleichmäßige Kraftaufnahme ermöglicht wird.

Gelöst wird die Aufgabe durch eine Struktur zum Absorbieren der Energie von darauf auftreffenden Stößen, wobei die Struktur durch einen Stoß plastisch deformierbar ist und gegebenenfalls zumindest teilweise zerstört werden kann. Dabei sind die nachfolgenden Merkmale gewährleistet:
a) Die Struktur weist Rippen zur Verstärkung auf, wobei die Rippen derart in einem Winkel zur axialen Richtung zueinander angeordnet sind, dass bei Versagen einer Rippe bereits eine auf die Struktur wirkende Kraft in axialer Richtung von einer weiteren Rippe aufgenommen wird,
b) die Struktur weist in axialer Richtung verlaufende Rippen auf, wobei die Rippen im Wesentlichen wellenförmig oder zick-zack-förmig verlaufen,
c) die Struktur weist mindestens eine Rippe auf, die in einer ersten Ebene in axialer Richtung verläuft und mit mindestens zwei in einer zweiten Ebene in axialer Richtung, die zur ersten Ebene hin gedreht ist, verlaufenden Rippen verbunden ist.

In axialer Richtung im Sinne der vorliegenden Erfindung bedeutet bei einer nicht deformierten Struktur zum Absorbieren von Energie die Haupteinwirkrichtung eines auf die Struktur einwirkenden Stoßes. Im Allgemeinen stimmt diese Richtung auch mit der größten Längenausdehnung der Struktur überein.

Wenn die Struktur Rippen aufweist, die derart in einem Winkel zur axialen Richtung zueinander angeordnet sind, dass bei Versagen einer Rippe bereits eine auf die Struktur wirkende Kraft in axialer Richtung von einer weiteren Rippe aufgenommen wird, sind die Rippen vorzugsweise in einem Winkel im Bereich von 10 bis 80°, bevorzugt im Bereich von 45 bis 75°, zur axialen Richtung gedreht. Hierdurch wird es ermöglicht, wenn eine Kraft auf die Struktur in axialer Richtung wirkt, dass zunächst eine Rippe einen Teil der Kraft aufnimmt, bis diese versagt, zum Beispiel durch Brechen, jedoch zu dem Zeitpunkt, zu dem ein Versagen der Rippe auftritt, bereits eine nächste Rippe die auf die Struktur einwirkende Kraft aufnehmen kann. Die Rippen sind dabei so angeordnet, dass über einen Querschnitt senkrecht zur axialen Richtung jeweils mindestens zwei Rippen geschnitten werden.

Zusätzlich zu den in einem Winkel zur axialen Richtung gedrehten Rippen können auch Längsrippen, die in axialer Richtung verlaufen, vorgesehen sein. Üblicherweise sind zumindest an den Außenseiten in Längsrichtung solche Längsrippen vorgesehen.

Dadurch, dass bereits auf eine weitere Rippe, die auf die Struktur wirkende Kraft wirkt, solange die vorhergehende Rippe, die versagt, zumindest noch teilweise existiert, lassen sich Kraftspitzen auf die Struktur vermeiden. Eine gleichmäßige Absorption der einwirkenden Kraft wird so erzielt.

Entsprechend führen auch in axialer Richtung verlaufende Rippen mit einem wellenförmigen oder zick-zack-förmigen Verlauf dazu, dass ein gleichmäßiges Versagen der Struktur erfolgt. Rippen, die in axialer Richtung verlaufen und damit in Richtung des auftreffenden Stoßes, werden im Allgemeinen rein axial belastet. Das Versagensbild dieser Rippen entspricht dem des Eulerschen Knickens, bei dem bei Überschreiten einer kritischen Last ein seitliches Versagen erfolgt. Eine solche Auslegung führt ebenfalls zu einem unerwünschten Springen der Kraftkurve. Durch den wellenförmigen Verlauf kann eine solche Charakteristik vermieden werden. Dies ist darauf zurückzuführen, dass die wellenförmig verlaufenden Rippen jeweils an ihren Wellenkämmen weiter verbiegen, bis diese am Wellenkamm nachgeben und brechen. Sobald die Rippen am Wellenkamm brechen, wirkt die Kraft bereits auf den nächsten schräg verlaufenden Teil der wellenförmig verlaufenden Rippe. Besonders bevorzugt ist es, wenn die wellenförmig verlaufenden Rippen an ihren jeweiligen Ecken, an denen diese die Richtung ändern, in einem Radius ausgeführt sind. An diesem Radius verbiegen die Rippen zunächst, bevor ein gezieltes Versagen erfolgt. Bei einem zick-zack-förmigen Verlauf brechen die Rippen jeweils an den Winkeln. Die auf die Rippen wirkende Kraft ist geringer als bei einem mit einem Radius ausgeführten Verlauf.

Durch den Radius wird bereits bei geringem Lastniveau eine Biegebelastung auf die Rippen kontrolliert induziert. Hierdurch wird zwar die maximal ertragbare Versagenskraft der Rippe verkleinert, jedoch wird eine hohe Variation der Kraftkurve über der Zeit herabgesetzt.

Wenn auf die Struktur zum Absorbieren von Energie ein Stoß in axialer Richtung auftrifft, zum Beispiel bei einem axial ablaufenden Crash bei einem Kraftfahrzeug, ist es charakteristisch, dass durch auftretende Unsymmetrien neben der dominierenden Axialkraft auch Querkräfte auftreten. Aus diesem Grund ist es erforderlich, dass eine im Wesentlichen in axialer Richtung wirkende Struktur zum Absorbieren von Energie auch eine gewisse Robustheit gegenüber Querkräften aufweist, um eine sichere Funktion auch bei nicht idealen Beanspruchungen zu gewährleisten.

Solche nicht idealen Beanspruchungen treten insbesondere bei Kraftfahrzeugen zum Beispiel auch dadurch auf, dass ein Crash nicht direkt in axialer Richtung verläuft, sondern zum Beispiel leicht versetzt oder in einem geringen Winkel.

Die Robustheit bei auf die Struktur wirkenden Querkräften kann zum Beispiel dadurch gesteigert werden, dass die Struktur mindestens eine Rippe aufweist, die in einer ersten Ebene in axialer Richtung verläuft und mit mindestens zwei in einer zweiten Ebene in axialer Richtung, die zur ersten Ebene hin gedreht ist, verlaufenden Rippen verbunden ist. Der Aufbau der Struktur ist dabei zum Beispiel in Form eines Doppel-T-Trägers ausgeführt. Durch die in einer ersten Ebene und in einer zweiten Ebene, die zur ersten Ebene gedreht ist, verlaufenden Rippen, wird die Struktur insbesondere gegen solche Querkräfte verstärkt.

Neben nur einer Rippe, die in einer ersten Ebene in axialer Richtung verläuft und zwei in einer zweiten Ebene in axialer Richtung, die zur ersten Ebene hin gedreht ist, verlaufenden Rippen, wie dies zum Beispiel bei einem Doppel-T-Träger der Fall ist, ist es zum Beispiel auch möglich, zwei parallel verlaufende Rippen in der ersten Ebene vorzusehen, die jeweils mit zwei in einer zweiten Ebene in axialer Richtung, die zur ersten Ebene hin gedreht ist, verlaufenden Rippen verbunden sind. Auch ist jede beliebige andere Gestaltung möglich. So sind zum Beispiel auch mehr als zwei Rippen in jede Richtung einsetzbar.

Durch den Aufbau, bei dem die Struktur in Stoßrichtung mindestens zwei Schichten umfasst, die jeweils unterschiedliche Nachgiebigkeitseigenschaften und unterschiedliches Versagensverhalten aufweisen, ist es möglich, dass zum Beispiel zunächst eine Schicht auf einem kleineren Kraftniveau versagt, daraufhin eine Schicht auf einem etwas höheren Kraftniveau. Bei mehr als zwei Schichten ist es bevorzugt, wenn jede Schicht bei einem etwas höheren Kraftniveau versagt als die vorhergehende. Dies führt zu einer kontrollierten Absorption der durch den Stoß auf die Struktur wirkenden Kraft, wobei durch die immer größere benötigte Kraft, die zum Versagen einer Schicht führt, dazu führt, dass die Geschwindigkeit, mit der die Struktur durch Versagen gestaucht wird, mit zunehmender Längenabnahme aufgrund des Versagens abnimmt. Dies führt zum Beispiel bei einem Crash bei einem Kraftfahrzeug zu einer kontinuierlichen Abnahme der Geschwindigkeit, mit der sich das Kraftfahrzeug bewegt.

In einer bevorzugten Ausführungsform sind die Rippen in axialer Richtung in zunehmender Höhe ausgeführt. Die Höhe der Rippen nimmt dabei vorzugsweise in Richtung ihrer Befestigung und damit, bei einem axial einwirkenden Stoß, in Stoßrichtung zu. Durch die Zunahme der Höhe der Rippen wird dem aufgrund von Querkräften auftretenden Biegemomentenverlauf Rechnung getragen. So ist das Biegemoment auf der der Einwirkseite des Stoßes abgewandten Seite größer als direkt an der Einwirkstelle des Stoßes. Alternativ ist es auch möglich, dass die Breite des Profils bei gleichbleibender Höhe der Rippen zunimmt. Auch hierdurch wird dem Biegemomentenverlauf bei Querkräften Rechnung getragen. Eine weitere Alternative ist, dass die Abmessungen der Struktur in axialer Richtung zunehmen. Bei Zunahme der Abmessungen der Struktur in axialer Richtung nehmen die Abmessungen sowohl in Höhe als auch in Breite zu. Alternativ ist es weiterhin möglich, dass die Wandstärke der Rippen in axialer Richtung zunimmt, wobei die Rippen auf der der Einwirkstelle des Stoßes zugewandten Seite die geringste Wandstärke aufweisen. Die vorstehend beschriebenen Änderungen der Geometrie, das heißt, die Zunahme der Höhe der Rippen, die Zunahme der Breite des Profils, die Zunahme der Abmessungen der Struktur in axialer Richtung und die Zunahme der Wandstärke der Rippen können auch in jeder beliebigen Kombination verwirklicht werden.

Wenn die Struktur mindestens eine Rippe aufweist, die in einer ersten Ebene in axialer Richtung verläuft und mit mindestens zwei in einer zweiten Ebene in axialer Richtung, die zur ersten Ebene hin gedreht ist, verlaufenden Rippen verbunden ist, ist neben der Gestaltung als Doppel-T-Träger zum Beispiel auch eine Gestaltung möglich, bei der die Struktur mindestens zwei in zueinander parallelen Ebenen in axialer Richtung verlaufende Rippen umfasst, die mit jeweils zwei in einer dazu gedrehten Ebene verlaufenden Rippen verbunden sind. Die in zwei parallelen Ebenen verlaufenden Rippen können dabei direkt parallel verlaufen oder so versetzt sein, dass diese an unterschiedlichen Seiten mit einer in der dazu gedrehten Ebene verlaufenden Rippe verbunden sind. Hierbei ist es zum Beispiel möglich, dass zwei nebeneinander liegende Rippen an ihrer Oberseite verbunden sind und zwei weitere nebeneinander liegende Rippen an ihrer Unterseite durch die in den parallel verlaufenden Ebenen liegenden Rippen. Dabei ist es zum Beispiel möglich, dass bei drei parallel verlaufenden Rippen zwei Rippen an ihrer Oberkante mit einer in einer senkrecht dazu liegenden Ebene verlaufenden Rippe verbunden sind, und die mittlere und die andere äußere Rippe der drei parallel verlaufenden Rippen an ihrer Unterseite mit der in der gedrehten Ebene verlaufenden Rippe verbunden sind. Bei vier parallel verlaufenden Rippen, von denen jeweils zwei an ihrer Oberseite und zwei an ihrer Unterseite mit der in der dazu gedrehten Ebene verlaufenden Rippe verbunden sind, ist es zum Beispiel möglich, dass die zwei in der Mitte liegenden Rippen durch eine in einer weiteren parallelen Ebene, die zwischen der oberen und der unteren Ebene liegt, verlaufenden Rippe miteinander verbunden sind. Weiterhin können sich zum Beispiel aus den Rippen noch senkrecht dazu verlaufende weitere Rippen erstrecken.

Neben parallel verlaufenden Rippen, die durch die in der dazu gedrehten Ebene verlaufenden Rippen verbunden sind, ist es auch möglich, dass die mit den in parallelen Ebenen verlaufenden Rippen verbundenen Rippen zum Beispiel in einer geneigten Ebene verlaufen. Der Winkel zwischen der in der ersten Ebene verlaufenden Rippe und einer in einer dazu gedrehten zweiten Ebene verlaufenden Rippe ist dann zum Beispiel größer oder kleiner als 90°.

Derartige Querschnittsformen, bei denen Rippen in mindestens zwei zueinander in axialer Richtung gedrehten Ebenen verlaufen, führen jeweils zu einer Verbesserung der Aufnahme von Querkräften.

Als Material, aus dem die Struktur zum Absorbieren der Energie gefertigt ist, wird vorzugsweise ein Polymermaterial eingesetzt. Das Polymermaterial ist zum Beispiel ein Thermoplast oder ein Duroplast. Diese können gefüllt oder ungefüllt eingesetzt werden. Bevorzugt werden jedoch gefüllte Polymere verwendet.

Als Polymere eignen sich zum Beispiel natürliche und synthetische Polymere oder deren Derivate, Naturharze sowie synthetische Harze und deren Derivate, Proteine, Cellulose-Derivate und dergleichen. Diese können - müssen jedoch nicht - chemisch oder physikalisch härtend, beispielsweise luftaushärtend, strahlungshärtend oder temperaturhärtend, sein.

Neben Homopolymeren können auch Copolymere oder Polymergemische eingesetzt werden.

Bevorzugte Polymere sind ABS (Acrylnitril-Butadien-Styrol), ASA (Acrylnitril-Styrol-Acrylat); acrylierte Acrylate; Alkydharze; Alkylenvinylacetate; Alkylenvinylacetat-Copolymere, insbesondere Methylenvinylacetat, Ethylenvinylacetat, Butylenvinylacetat; Alkylenvinylchlorid-Copolymere; Aminoharze; Aldehyd- und Ketonharze; Cellulose und Cellulose-Derivate, insbesondere Hydroxyalkylcellulose, Celluloseester, wie -acetate, - propionate, -butyrate, Carboxyalkylcellulosen, Cellulosenitrate; Epoxyacrylate; Epoxidharze; modifizierte Epoxidharze, zum Beispiel bifunktionelle oder polyfunktionelle Bisphenol-A- oder Bisphenol-F-Harze, Epoxy-Novolak-Harze, bromierte Epoxidharze, cycloaliphatische Epoxidharze; aliphatische Epoxidharze, Glycidether, Vinylether, Ethylenacrylsäurecopolymere; Kohlenwasserstoffharze; MABS (transparentes ABS mit Acrylat-Einheiten enthaltend); Melaminharze; Maleinsäureanhydridcopolymerisate; (Meth)acrylate; Naturharze; Kolophoniumharze; Schellack; Phenolharze; Polyester; Polyesterharze, wie Phenylesterharze; Polysulfone (PSU); Polyethersulfone (PESU); Polyphenylensulfon (PPSU); Polyamide; Polyimide; Polyaniline; Polypyrole; Polybutylentherephtalat (PBT); Polycarbonate (zum Beispiel Makrolon^{®} der Bayer AG); Polyesteracrylate; Polyetheracrylate; Polyethylen; Polyethylenthiophene; Polyethylennaphthalate; Polyethylentherephtalate (PET); Polyethylentherephtalat-Glycol (PETG); Polypropylen; Polymethylmethacrylat (PMMA); Polyphenylenoxid (PPO); Polyoxymethylen (POM); Polystyrole (PS); Polytetrafluorethylen (PTFE); Polytetrahydrofuran; Polyether (zum Beispiel Polyethylenglycol, Polypropylenglycol); PolyvinylVerbindungen, insbesondere Polyvinylchlorid (PVC), PVC-Copolymere, PVdC, Polyvinylacetat sowie deren Copolymere, gegebenenfalls teilhydrolisierter Polyvinylalkohol, Polyvinylacetale, Polyvinylacetate, Polyvinylpyrrolidon, Polyvinylether, Polyvinylacrylate und -methacrylate in Lösung und als Dispersion sowie deren Copolymere, Polyacrylsäureester und Polystyrolcopolymere; Polystyrol (schlagfest oder nicht schlagfest modifiziert); Polyurethane, unvernetzte bzw. mit Isocyanaten vernetzt; Polyurethanacrylate; Stryrol-Acrylnitril (SAN); Styrol-Acryl-Copolymere; Styrol-Butadien-Blockcopolymere (zum Beispiel Styroflex^{®} oder Styrolux^{®} der BASF SE, K-Resin^{™} der TPC); Proteine, zum Beispiel Casein; SIS; Triazin-Harz, Bismaleimid-Triazin-Harz (BT), Cyanatester-Harz (CE), allylierter Polyphenylen-Ether (APPE). Weiterhin können Mischungen zweier oder mehrerer Polymere eingesetzt werden.

Besonders bevorzugte Polymere sind Acrylate, Acrylatharze, Cellulose-Derivate, Methacrylate, Methacrylatharze, Melamin- und Aminoharze, Polyalkylene, Polyimide, Epoxidharze, modifizierte Epoxidharze, zum Beispiel bifunktionelle oder polyfunktionelle Bisphenol-A- oder Bisphenol-F-Harze, Epoxy-Novolak-Harze, bromierte Epoxid-Harze, cycloaliphatische Epoxid-Harze; aliphatische Epoxid-Harze, Glycidether, Cyanatester, Vinylether, Phenolharze, Polyimide, Melaminharze und Aminoharze, Polyurethane, Polyester, Polyvinylacetale, Polyvinylacetate, Polystyrole, Polystyrol-Copolymere, Polystyrolacrylate, Styrol-Butadien-Blockcopolymere, Styrol-Acrylnitril-Copolymere, Acrylnitril-Butadien-Styrol, Acrylnitril-Styrol-Acrylat, Polyoxymethylen, Polysulfone, Polyethersulfone, Polyphenylensulfon, Polybutylenterephthalat, Polycarbonate, Alkylenvinylacetate und Vinylchlorid-Copolymere, Polyamide, Cellulose-Derivate sowie deren Copolymere und Mischungen zweier oder mehrerer dieser Polymere.

Insbesondere bevorzugte Polymere sind Polyamide, beispielsweise Polyamid 46, Polyamid 6, Polyamid 11, Polyamid 66, Polyamid 6/6, Polyamid 6/10 oder Polyamid 6/12, Polypropylen, Polyethylen, Styrol-Acrylnitril-Copolymere, Acrylnitril-Butadien-Styrol, Acrylnitril-Styrol-Acrylat, Polyoxymethylen, Polysulfone, Polyethersulfone, Polyphenylensulfone, Polybutylenterephthalat, Polycarbonate sowie deren Mischungen.

Das Polymermaterial ist vorzugsweise verstärkt. Insbesondere ist das Polymermaterial faserverstärkt. Zur Verstärkung kann jede beliebige, dem Fachmann bekannte, zur Verstärkung übliche Faser verwendet werden. Geeignete Fasern sind zum Beispiel Glasfasern, Kohlenstofffasern, Aramidfasern, Borfasern, Metallfasern oder Kaliumtitanatfasern. Die Fasern können in Form von Kurzfasern oder Langfasern eingesetzt werden. Auch können die Fasern geordnet oder ungeordnet im Polymermaterial enthalten sein. Insbesondere bei Einsatz von Langfasern ist jedoch eine geordnete Anordnung üblich. Die Fasern können dabei zum Beispiel in Form von Einzelfasern, Fasersträngen, Matten, Geweben, Gestricken oder Rovings eingesetzt werden. Wenn die Fasern in Form von Langfasern, als Rovings oder als Fasermatte eingesetzt werden, so werden die Fasern üblicherweise in eine Form eingelegt und anschließend mit dem Polymermaterial umgossen. Die so hergestellte Struktur kann einlagig oder mehrlagig aufgebaut sein. Bei einem mehrlagigen Aufbau können die Fasern der einzelnen Lagen jeweils gleichgerichtet sein oder die Fasern der einzelnen Lagen sind in einem Winkel von -90° bis +90° zueinander verdreht.

Bevorzugt werden jedoch Kurzfasern eingesetzt. Bei Einsatz von Kurzfasern werden diese üblicherweise der Polymermasse vor dem Aushärten zugemischt. Der Grundkörper der Struktur kann zum Beispiel durch Extrusion, Spritzgießen oder Gießen gefertigt werden. Bevorzugt wird der Grundkörper der Struktur durch Spritzgießen oder Gießen gefertigt. Im Allgemeinen sind die Kurzfasern in der Struktur ungerichtet enthalten. Wenn die Struktur jedoch durch ein Spritzgussverfahren hergestellt wird, kann sich eine Ausrichtung der Kurzfasern durch das Pressen der die Fasern enthaltenden Polymermasse durch eine Anspritzdüse in das Werkzeug ergeben.

Als Verstärkungsmittel eignen sich neben Fasern auch beliebige andere Füllstoffe, die dem Fachmann bekannt sind und die steifigkeits- und/oder festigkeitserhöhend wirken. Hierzu zählen unter anderem auch beliebige Partikel ohne Vorzugsrichtung. Derartige Partikel sind im Allgemeinen kugelförmig, plättchenförmig oder zylindrisch. Die tatsächliche Form der Partikel kann dabei von der idealisierten Form abweichen. So können insbesondere kugelförmige Partikel in der Realität zum Beispiel auch tropfenförmig oder abgeflacht sein.

Neben Fasern eingesetzte Verstärkungsmaterialien sind zum Beispiel Graphit, Kreide, Talkum und nanoskalige Füllstoffe.

Besonders bevorzugt zur Verstärkung werden jedoch Glasfasern eingesetzt. Insbesondere bevorzugt als Material zur Herstellung der Struktur zum Absorbieren der Energie sind glasfaserverstärkte Polyamide.

Neben Polymermaterialien können zur Herstellung der Struktur zum Absorbieren der Energie auch Metalle verwendet werden, die durch Gussverfahren geformt werden können. So eignen sich zum Beispiel durch Druckgussverfahren verarbeitbare Leichtmetalle wie Aluminium oder Magnesium. Jedoch können auch eisenhaltige Metalle, zum Beispiel Stähle oder Gusseisen, die durch Gussverfahren verarbeitet werden können, eingesetzt werden.

Die Struktur kann in Stoßrichtung mindestens zwei Schichten umfassen, die jeweils unterschiedliche Nachgiebigkeitseigenschaften und unterschiedliches Versagensverhalten aufweisen.

Um ein gleichmäßiges Einleiten des auf die Struktur wirkenden Stoßes zu erzielen, ist es bevorzugt, dass auf der Seite, auf die der Stoß auf die Struktur wirkt, ein Stempel ausgebildet ist, der mindestens den Querschnitt der Struktur abdeckt. Die Querschnittsfläche des Stempels kann jedoch zum Beispiel auch größer sein als der Querschnitt der Struktur. Der Stempel wird dabei vorzugsweise aus einem steifen Material gefertigt, so dass eine an einer beliebigen Position auf den Stempel wirkende Kraft gleichmäßig auf die Struktur zum Absorbieren der Energie verteilt wird. Als Materialien, aus denen der Stempel gefertigt ist, eignen sich zum Beispiel die gleichen Werkstoffe, die sich auch zur Herstellung der Struktur zum Absorbieren von Energie eignen. Dabei kann der Stempel aus dem gleichen Material gefertigt sein wie die Struktur oder auch aus einem vom Material der Struktur verschiedenen Material.

In Abhängigkeit von der Querschnittsfläche der Struktur zum Absorbieren der Energie kann der Stempel jeden beliebigen Querschnitt einnehmen. Bevorzugt ist der Stempel jedoch als Quader, Zylinder oder Prisma mit einem beliebigen Querschnitt ausgebildet. Neben einem gleichbleibenden Querschnitt in axialer Richtung ist es jedoch auch möglich, dass die Querschnittsfläche des Stempels in axialer Richtung zum Beispiel zunimmt oder abnimmt. So ist es zum Beispiel auch möglich, dass der Stempel in Form eines Kegelstumpfes oder eines Pyramidenstumpfes ausgebildet ist.

Der Stempel ist insbesondere aus dem gleichen Material gefertigt, wie die Struktur zum Absorbieren der Energie.

Der Stempel kann an unterschiedlichen Positionen im Bauteil angeordnet sein. So ist es zum Beispiel möglich, dass der Stempel so angeordnet ist, dass der Stempel erst nach Auftreten einer bestimmten Belastung als Stempel wirkt. Hierzu ist zum Beispiel in axialer Richtung sowohl vor dem Stempel als auch hinter dem Stempel ein Bereich mit einer verformbaren Struktur ausgebildet. Im Allgemeinen ist jedoch nur auf der der Einwirkseite des Stoßes abgewandten Seite des Stempels die Struktur angeordnet, die Energie absorbiert. Der Stempel und die Struktur zum Absorbieren der Energie stellen zwar zwei separate Bauteile dar, jedoch ist es - insbesondere bei der Verwendung des gleichen Materials - möglich, dass beide Bauteile im Spritzgussverfahren in einem Schuss zusammen hergestellt werden.

Ausführungsformen der Erfindung sind in den Zeichnungen dargestellt und werden in der nachfolgenden Beschreibung näher erläutert.

Es zeigen:
- Figur 1: eine Draufsicht auf eine schematische Darstellung einer Struktur zur Absorption von Stößen in einer ersten Ausführungsform,
- Figur 2: eine Draufsicht auf eine schematische Darstellung einer Struktur zur Absorption von Stößen in einer zweiten Ausführungsform,
- Figur 3: eine dreidimensionale Darstellung einer Struktur zur Absorption von Stößen mit Rippen, die in zueinander gedrehten Ebenen verlaufen, in einer ersten Ausführungsform,
- Figur 4: eine dreidimensionale Darstellung einer Struktur zur Absorption von Stößen mit in zueinander gedrehten Ebenen verlaufenden Rippen mit zunehmender Rippenhöhe,
- Figur 5: eine dreidimensionale Darstellung einer Struktur zur Absorption von Stößen mit in zueinander gedrehten Ebenen verlaufenden Rippen mit zunehmender Breite,
- Figuren 6.1 bis 6.4: jeweils einen Querschnitt verschiedener Ausführungsformen mit in zueinander gedrehten Ebenen verlaufenden Rippen,
- Figur 7: eine Draufsicht auf eine schematische Darstellung einer Struktur mit drei Schichten und unterschiedlichen Nachgiebigkeitseigenschaften,
- Figur 8: Seitenansicht einer erfindungsgemäßen Struktur mit Stempel.

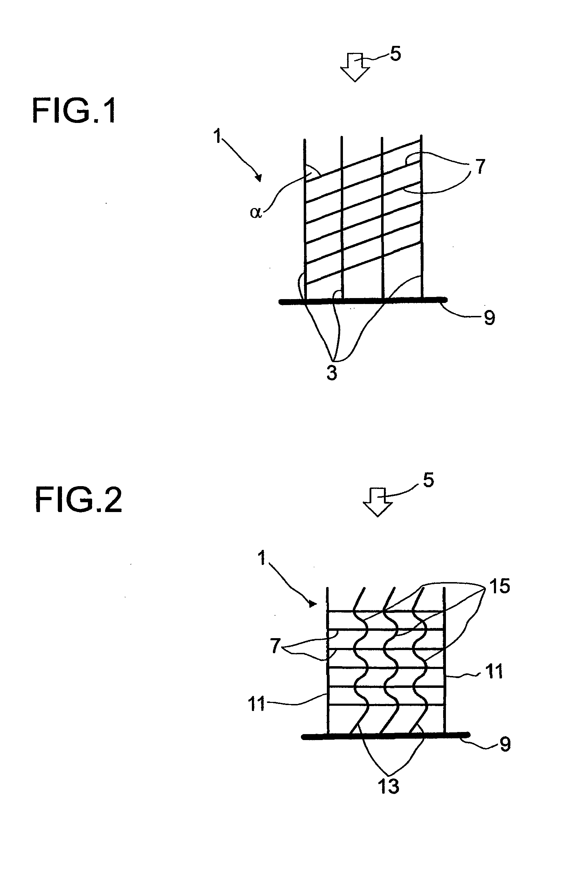

In Figur 1 ist eine Draufsicht auf eine schematische Darstellung einer Struktur zur Absorption von Stößen in einer ersten Ausführungsform dargestellt.

Eine erfindungsgemäß ausgebildete Struktur 1 zum Absorbieren der Energie von darauf auftreffenden Stößen umfasst Längsrippen 3. Die Längsrippen 3 sind in axiale Richtung ausgerichtet, wobei axiale Richtung der Hauptangriffsrichtung eines auftreffenden Stoßes entspricht. Die Richtung des auf die Struktur 1 wirkenden Stoßes ist mit einem Pfeil 5 dargestellt. Um eine gleichmäßige Absorption der Energie des Stoßes zu erzielen, sind die Längsrippen 3 mit Querrippen 7 verbunden. Die Querrippen 7 verlaufen dabei in einem Winkel α zu den Längsrippen 3, der kleiner als 90° ist. Der Winkel α wird vorzugsweise so gewählt, dass eine Ebene senkrecht zur Stoßrichtung 5 jeweils mindestens zwei Querrippen 7 schneidet. Auf diese Weise wirkt bei Versagen einer Rippe aufgrund der darauf einwirkenden Kraft durch den Stoß 5 die Kraft auch bereits auf die der versagenden Rippe folgende Rippe. Ein gleichmäßiges Absorbieren der Energie wird auf diese Weise erreicht.

An der Seite, die der Angriffsseite des Stoßes 5 entgegengesetzt ist, ist die Struktur im Allgemeinen an einem Träger 9 befestigt. Der Träger 9 verläuft üblicherweise in einer Ebene senkrecht zur Stoßrichtung 5. Es ist aber auch möglich, dass der Träger 9 in der Stoßrichtung 5 oder jedem beliebigen anderen Winkel dazu verläuft.

Eine Draufsicht auf eine schematische Darstellung einer Struktur zur Absorption von Stößen in einer zweiten Ausführungsform ist in Figur 2 dargestellt.

Die in Figur 2 dargestellte Ausführungsform unterscheidet sich von der in Figur 1 dargestellten Ausführungsform dadurch, dass die Querrippen 7 im Wesentlichen in einer Ebene quer zur Stoßrichtung 5 verlaufen und damit parallel zum Träger 9 ausgerichtet sind. In Stoßrichtung 5 verlaufen zwei Längsrippen 11, die jeweils einen seitlichen Abschluss der Struktur 1 bilden. Weiterhin umfasst die in Figur 2 dargestellte Struktur 1 in axiale Richtung ausgerichtete, wellenförmig verlaufende Rippen 13. Durch die wellenförmige Struktur der Rippen 13 weisen diese eine Form auf, die zu einem kontrollierten Versagen führt. Durch den auftreffenden Stoß 5 werden die wellenförmig verlaufenden Rippen 13 zunächst auf der Eingriffsseite des Stoßes verformt. Im Bereich eines Wellenkamms 15, in dem üblicherweise eine Querrippe 7 verläuft, verbiegt sich die wellenförmig verlaufende Rippe 13 zunächst, bis durch die Biegung ein Versagen durch Brechen der wellenförmig verlaufenden Rippe eintritt. Beim Brechen wirkt die Energie des Stoßes 5 bereits auf den nächsten Bereich der wellenförmig verlaufenden Rippe 13 bis zum nächsten Wellenkamm 15. Auf diese Weise wird ebenfalls ein gleichmäßiges Versagen der Struktur durch ein gleichmäßiges Komprimieren in axialer Richtung erzielt.

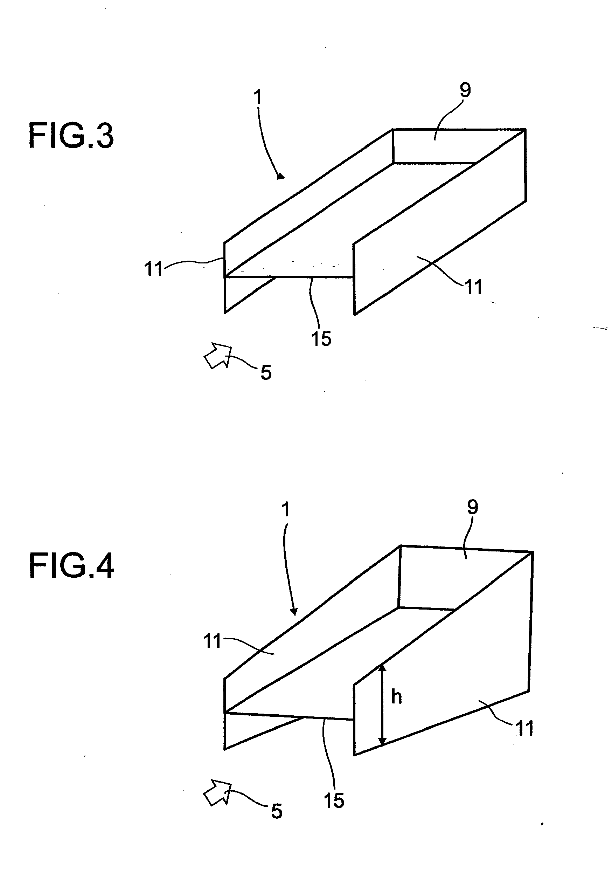

Eine Struktur, durch die auch Querkräfte, die auf die Struktur 1 wirken, aufgenommen werden, ist in einer ersten Ausführungsform in Figur 3 dargestellt. In diesem Fall ist die Struktur 1 dreidimensional gezeigt. Im Unterschied zu den Strukturen gemäß Figur 1 und Figur 2 umfasst die in Figur 3 dargestellte Struktur 1 zwei äußere Längsrippen 11, die in einer ersten Ebene in axialer Richtung verlaufen. Axiale Richtung bedeutet auch in diesem Fall die Hauptstoßrichtung 5. Neben den in einer ersten Ebene in axialer Richtung verlaufenden Längsrippen 11 umfasst die Struktur 1, wie sie in Figur 3 dargestellt ist, eine in einer zweiten Ebene in axialer Richtung, die zur ersten Ebene hin gedreht ist, verlaufende Rippe 15. Durch die Gestaltung und den Verlauf der Rippen 11, 15 ergibt sich ein Querschnitt in Form eines Doppel-T-Trägers. Durch die in zueinander gedrehten Ebenen verlaufenden Rippen ist dieser auch stabil gegen Biegebeanspruchung, wie sie durch Querkräfte auftreten können.

Die in Figur 4 dargestellte Ausführungsform unterscheidet sich von der in Figur 3 dargestellten Ausführungsform dadurch, dass die Längsrippen 11, die die Struktur 1 seitlich begrenzen, von der Einwirkseite des Stoßes 5 zum Träger 9 hin in ihrer Höhe h zunehmen. Durch die zunehmende Höhe wird dem Biegemomentenverlauf durch auftretende Querkräfte Rechnung getragen.

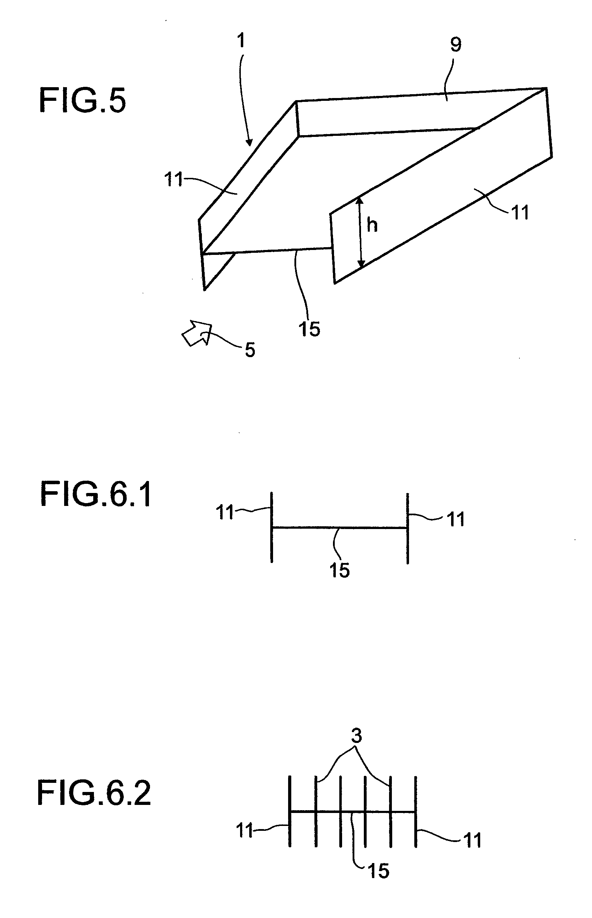

Alternativ zu der in Figur 4 dargestellten Ausführungsform ist es auch möglich, bei gleichbleibender Höhe h der Längsrippen 11 die in der zweiten Ebene verlaufende Rippe 15 in zunehmender Breite zu gestalten. Hierdurch nimmt die Breite der Struktur 1 von der Einwirkseite des Stoßes zum Träger 9 hin zu. Auch ist es möglich, die Struktur 1 mit sowohl zunehmender Breite, wie sie in Figur 5 dargestellt ist, als auch zunehmender Höhe der Längsrippen 11, wie sie in Figur 4 dargestellt sind, auszuführen. Eine solche Ausführung führt zu einer Stabilisierung gegenüber Querkräften, die sowohl von oben oder unten, als auch seitlich auf die Struktur 1 einwirken.

Querschnitte verschiedener Ausführungsformen mit Rippen, die in zueinander gedrehten Ebenen verlaufen, sind in den Figuren 6.1 bis 6.4 dargestellt. Figur 6.1 zeigt dabei einen Querschnitt, der den in den Figuren 3 bis 5 dargestellten Ausführungsformen entspricht. Bei diesem sind zwei Längsrippen 11 mit einer Rippe 15, die in einer zweiten Ebene verläuft, die zur Ebene, in denen die Längsrippen 11 verlaufen, gedreht ist, verbunden. Die in der zweiten Ebene verlaufende Rippe 15 ist dabei mittig mit den Längsrippen 11 verbunden, so dass diese Abschnitte aufweisen, die oberhalb und unterhalb der Rippe 15 hervorstehen.

Die in Figur 6.2 dargestellte Ausführungsform unterscheidet sich von der in Figur 6.1 dargestellten Ausführungsform dadurch, dass neben den begrenzenden Längsrippen 11 weitere Längsrippen vorgesehen sind, die jeweils oberhalb und unterhalb der in der zweiten Ebene verlaufenden Rippe 15 hervorstehen und parallel zu den begrenzenden Längsrippen 11 ausgebildet sind. Wenn die Längsrippen 11, wie in Figur 4 dargestellt, in zunehmender Höhe h ausgebildet sind, so ist es bei der in Figur 6.2 dargestellten Ausführungsform bevorzugt, dass auch die Längsrippen 3, die zwischen den begrenzenden Längsrippen 11 ausgeführt sind, in zunehmender Höhe h ausgebildet sind. Bei zunehmender Breite der Struktur, wie sie in Figur 5 dargestellt ist, sind die zwischen den begrenzenden Längsrippen 11 angeordneten Längsrippen 3 vorzugsweise so ausgerichtet, dass die Abstände zwischen den einzelnen Längsrippen 3, 11 gleichmä-βig von der Einwirkfläche des Stoßes 5 zum Träger 9 hin zunehmen.

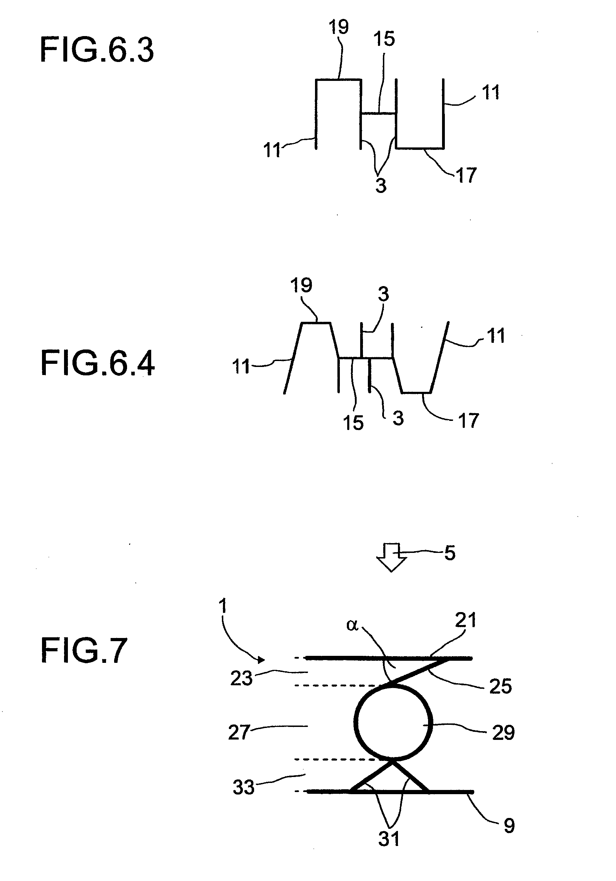

Neben einer durchgehenden Rippe 15 ist es auch möglich, die Längsrippen 3, 11, wie in Figur 6.3 dargestellt, mit in gedrehten Ebenen zu den Längsrippen 3, 11 verlaufenden Rippen 15, 17, 19 zu verbinden, wobei die Rippen 15, 17, 19 jeweils in einer unterschiedlichen Höhe mit den Längsrippen 3, 11 verbunden sind. So verbindet gemäß der in Figur 6.3 dargestellten Ausführungsform eine erste in der zweiten Ebene verlaufende Rippe 17 eine begrenzende Längsrippe 11 mit einer Längsrippe 3 entlang der Unterseite der Rippen 3, 11, eine in einer zweiten Ebene verlaufende Rippe 15 verbindet zwei Längsrippen 3 miteinander und eine dritte Rippe 19 verbindet eine Längsrippe 3 mit der zweiten begrenzenden Längsrippe 11 an der Oberseite der Rippen 3, 11.

Eine Alternative zu der in Figur 6.3 dargestellten Ausführungsform ist in Figur 6.4 dargestellt. Bei dieser verlaufen die begrenzenden Längsrippen 11 nicht in einer um 90° gedrehten Ebene zur Rippe 15, 17, 19, sondern in einem Winkel, der größer ist als 90°, so dass eine Trapezform erzielt wird. Durch die Trapezform wird unter anderem das Entformen der Struktur 1 aus einem Spritzgusswerkzeug erleichtert. Zur weiteren Verstärkung sind zusätzliche Längsrippen 3, die sich oberhalb und unterhalb der in der mittleren Ebene verlaufenden Rippe 15 erstrecken.

Neben den in den Figuren 6.1 bis 6.4 dargestellten Querschnittsformen ist auch jeder beliebige andere Querschnitt für eine Rippenstruktur denkbar, bei der Rippen 3, 11, 15, 17, 19 in zueinander gedrehten Ebenen verlaufen.

Eine Draufsicht auf eine schematische Darstellung einer Struktur mit drei Schichten mit unterschiedlichen Nachgiebigkeitseigenschaften ist beispielhaft in Figur 7 dargestellt. Durch die unterschiedlichen Nachgiebigkeitseigenschaften erfolgt ein Versagen der einzelnen Schichten jeweils bei unterschiedlichen auf die Schichten wirkenden Kräften. Die Struktur umfasst einen Träger 9, an dem diese befestigt ist, und eine Wirkfläche 21, auf die ein Stoß 5 einwirkt. In der hier dargestellten Ausführungsform umfasst die Struktur 1 drei Schichten. In einer ersten Schicht 23 ist eine erste Rippe 25 in einem Winkel α zu einer Ebene quer zur Stoßrichtung 5 ausgebildet. Bei Einwirken eines Stoßes auf die Wirkfläche 21 bewegt sich diese zum Träger 9 hin. Die Rippe 25 wird dabei deformiert, bis diese parallel zur Wirkfläche 21 ausgerichtet ist. Dabei ist es möglich, dass die Rippe 25 zum Beispiel an einer Verbindungsstelle zur Wirkfläche 21 oder an einer Verbindungsstelle zu einer zweiten Schicht 27 bricht. Auch ist es möglich, dass die Rippe 25 an einer beliebigen Stelle dazwischen bricht. In der hier dargestellten Ausführungsform ist die zweite Schicht 27 als bogenförmiges Profil, hier als kreisrundes Profil, ausgeführt. Nach dem Versagen der ersten Schicht 23 wirkt die Kraft über die Wirkfläche 21 auf die zweite Schicht 27. Die zweite Schicht 27, hier das kreisförmige Profil 29, wird zunächst durch Zusammenpressen verformt, bis dieses durch Brechen versagt. Das kreisförmige Profil 29 der zweiten Schicht 27 liegt an Rippen 31 einer dritten Schicht 33 an. Die Rippen 31 sind dabei so gestaltet, dass die notwendige Kraft, die zu einem Versagen der Rippen 31 führt, größer ist als die erforderliche Kraft, die zum Versagen der Rippe 25 oder der Struktur 29 führt. Dies wird zum Beispiel, wie in Figur 7 dargestellt, dadurch erreicht, dass die Rippen 31 in einem Winkel aufeinander zulaufen. Hierdurch stützen sich die Rippen 31 bei Einwirken eines Stoßes in Stoßrichtung 5 gegeneinander ab.

Neben der in Figur 7 dargestellten Struktur ist aber auch jede beliebige andere Struktur der Schichten 23, 27, 33 denkbar, bei der die einzelnen Schichten 23, 27, 33 jeweils unterschiedliche Nachgiebigkeitseigenschaften aufweisen. So ist es zum Beispiel auch möglich, unterschiedliche Nachgiebigkeitseigenschaften dadurch zu erzielen, dass die Rippen enger zueinander platziert werden und dadurch mehr Rippen vorgesehen sind. Die Rippen verlaufen dabei zum Beispiel entsprechend der Ausführungsform, wie sie in den Figuren 1 oder 2 oder auch in den Ausführungsformen der Figuren 3 bis 6.4 dargestellt sind.

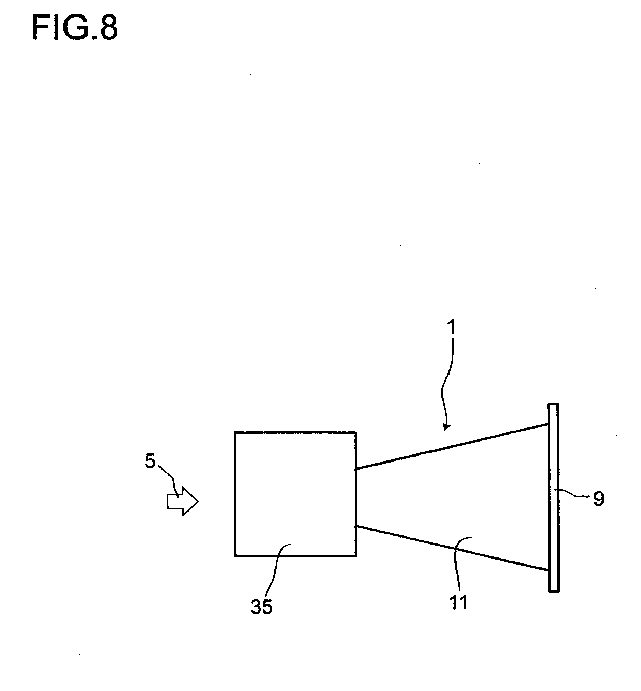

Eine Seitenansicht einer Struktur 1 mit einem Stempel ist in Figur 8 dargestellt. Die in Figur 8 dargestellte Struktur umfasst seitlich begrenzende Längsrippen 11, die in einer zunehmenden Höhe, entsprechend der Ausführungsform gemäß Figur 4, ausgeführt sind. Es ist aber auch jede beliebige andere Struktur gemäß den Ausführungsformen der Figuren 1 bis 7 möglich. Die Struktur 1 ist an einem Träger 9 befestigt. Auf der Seite, auf der ein Stoß 5 auf die Struktur 1 wirkt, ist ein Stempel 35 angebracht. Durch den Stempel 35 wird die Energie des Stoßes 5 gleichmäßig in die Struktur 1 übertragen. Der Stempel 35 ist dabei zum Beispiel ein massiver Quader, Zylinder oder ein massives Prisma mit beliebigem Querschnitt. Auch ist es möglich, als Stempel 35 zum Beispiel einen Kegelstumpf oder einen Pyramidenstumpf einzusetzen. Der Stempel 35 ist aus einem Material gefertigt, das durch Einwirken des Stoßes 5 nicht verformt wird. Die Energieabsorption des Stoßes erfolgt ausschließlich in der Struktur 1. Das Material für den Stempel 35 ist zum Beispiel das gleiche wie das Material für die Struktur 1.

Alternativ ist es auch möglich, den Stempel 35 zum Beispiel aus einem anderen Material als die Struktur 1 zu fertigen. Wenn die Struktur 1 aus einem Kunststoff gefertigt ist, ist es zum Beispiel möglich, den Stempel 35 aus einem Metall oder einer Keramik zu bilden. Bevorzugt wird der Stempel 35 jedoch aus dem gleichen Material gefertigt wie die Struktur 1.

## Patentansprüche

1. Struktur (1) zum Absorbieren der Energie von darauf auftreffenden Stößen, wobei die Struktur durch einen Stoß plastisch deformierbar ist und gegebenenfalls zumindest teilweise zerstört werden kann, wobei
die Struktur (1) in axialer Richtung verlaufende Rippen (13) aufweist, wobei die Rippen (13) im Wesentlichen wellenförmig oder zick-zack-förmig verlaufen, und
die Struktur (1) mindestens eine Rippe (15) aufweist, die in einer ersten Ebene in axialer Richtung verläuft und mit mindestens zwei in einer zweiten Ebene in axialer Richtung, die zur ersten Ebene hin gedreht ist, verlaufenden Rippen (11) verbunden ist,
**dadurch gekennzeichnet, dass**:
die Struktur (1) Rippen (7) zur Verstärkung aufweist, wobei die Rippen (7) derart in einem Winkel (α) zur axialen Richtung zueinander angeordnet sind, dass bei Versagen einer Rippe (7) bereits eine auf die Struktur (1) wirkende Kraft in axialer Richtung von einer weiteren Rippe (7) aufgenommen wird.

2. Struktur gemäß Anspruch 1, **dadurch gekennzeichnet, dass** die Rippen (11) in axialer Richtung in zunehmender Höhe (h) ausgeführt sind.

3. Struktur gemäß Anspruch 1 oder 2, **dadurch gekennzeichnet, dass** die Abmessungen der Struktur (1) in axialer Richtung zunehmen.

4. Struktur gemäß einem der Ansprüche 1 bis 3, **dadurch gekennzeichnet, dass** die in der ersten Ebene in axialer Richtung verlaufende Rippe (15) mit den mindestens zwei in der zweiten Ebene in axialer Richtung verlaufenden Rippen (3, 11) so verbunden ist, dass die in der zweiten Ebene in axialer Richtung verlaufenden Rippen (3, 11) oberhalb und unterhalb der in der ersten Ebene in axialer Richtung verlaufenden Rippe (15) hervorstehen.

5. Struktur gemäß einem der Ansprüche 1 bis 4, **dadurch gekennzeichnet, dass** die Struktur mindestens zwei in zueinander parallelen Ebenen in axialer Richtung verlaufende Rippen (15, 17, 19) umfasst, wobei die mindestens zwei in zueinander parallelen Ebenen verlaufenden Rippen (15, 17, 19) mit jeweils zwei in einer dazu gedrehten Ebene verlaufenden Rippen (3, 11) verbunden sind.

6. Struktur gemäß Anspruch 5, **dadurch gekennzeichnet, dass** jeweils zwei in zueinander parallelen Ebenen verlaufende Rippen (15, 17, 19) an unterschiedlichen Seiten mit einer in der dazu gedrehten Ebene verlaufenden Rippe (3, 11) verbunden sind.

7. Struktur gemäß einem der Ansprüche 1 bis 6, **dadurch gekennzeichnet, dass** die Struktur aus einem Polymermaterial gefertigt ist.

8. Struktur gemäß einem der Ansprüche 1 bis 7, **dadurch gekennzeichnet, dass** das Polymermaterial verstärkt ist.

9. Struktur gemäß Anspruch 8, **dadurch gekennzeichnet, dass** das Polymermaterial zur Verstärkung Kurzfasern enthält.

10. Struktur gemäß Anspruch 9, **dadurch gekennzeichnet, dass** die Kurzfasern Glasfasern, Kohlenstofffasern, Aramidfasern, Borfasern, Metallfasern oder Kaliumtitanatfasern sind.

11. Struktur gemäß einem der Ansprüche 1 bis 10, **dadurch gekennzeichnet, dass** auf der Seite, auf die der Stoß auf die Struktur wirkt, ein Stempel (35) ausgebildet ist, der mindestens den Querschnitt der Struktur (1) abdeckt.

12. Struktur gemäß Anspruch 11, **dadurch gekennzeichnet, dass** der Stempel (35) aus einem Polymermaterial oder einem Metall gefertigt ist.

13. Struktur gemäß Anspruch 12, **dadurch gekennzeichnet, dass** der Stempel (35) aus dem gleichen Material gefertigt ist wie die Struktur (1).

14. Struktur gemäß einem der Ansprüche 11 bis 13, **dadurch gekennzeichnet, dass** der Stempel (35) als Quader, Zylinder oder Prisma mit einem beliebigen Querschnitt ausgebildet ist.

15. Struktur gemäß einem der Ansprüche 1 bis 14, **dadurch gekennzeichnet, dass** die Struktur (1) in Stoßrichtung mindestens zwei Schichten (23, 27, 33) umfasst, die jeweils unterschiedliche Nachgiebigkeitseigenschaften und unterschiedliches Versagensverhalten aufweisen.

## Claims

1. A structure (1) for absorbing energy from impacts thereon, where the structure is plastically deformable by an impact, with optionally the possibility that it is at least to some extent disrupted, where
the structure (1) has ribs (13) running axially, the ribs (13) being in essence corrugated or of zigzag shape, and
the structure (1) has at least one rib (15) running axially in a first plane and connected to at least two ribs (11) running axially in a second plane rotated with respect to the first plane,
wherein:
the structure (1) has ribs (7) for reinforcement, where the ribs (7) have been arranged with respect to one another at an angle (α) with respect to the axial direction in such a way that on failure of a rib (7) a force acting on the structure (1) is immediately absorbed axially by another rib (7).

2. The structure according to claim 1, wherein the ribs (11) have been designed with axially increasing height (h).

3. The structure (1) according to claim 1 or 2, the dimensions of which increase axially.

4. The structure according to any of claims 1 to 3, wherein the rib (15) running axially in the first plane has been connected to the at least two ribs (3, 11) running axially in the second plane in such a way that the ribs (3, 11) running axially in the second plane protrude above and below the rib (15) running axially in the first plane.

5. The structure according to any of claims 1 to 4, which comprises at least two ribs (15, 17 and 19) running axially in mutually parallel planes, where the at least two ribs (15, 17 and 19) running in mutually parallel planes have been connected to, respectively, two ribs (3, 11) running in a plane rotated with respect thereto.

6. The structure according to claim 5, wherein respectively two ribs (15, 17 and 19) running in mutually parallel planes have been connected at different sides to a rib (3, 11) running in the plane rotated with respect thereto.

7. The structure according to any of claims 1 to 6, which has been manufactured from a polymer material.

8. The structure according to any of claims 1 to 7, wherein the polymer material has been reinforced.

9. The structure according to claim 8, wherein the polymer material comprises short fibers for reinforcement.

10. The structure according to claim 9, wherein the short fibers are glass fibers, carbon fibers, apistonid fibers, boron fibers, metal fibers, or potassium titanate fibers.

11. The structure according to any of claims 1 to 10, wherein, on the side on which the impact acts on the structure, there is a piston (35) which at least covers the cross section of the structure (1).

12. The structure according to claim 11, wherein the piston (35) has been manufactured from a polymer material or from a metal.

13. The structure according to claim 12, wherein the piston (35) and the structure (1) have been manufactured from the same material.

14. The structure according to any of claims 11 to 13, wherein the piston (35) is a parallelepiped, cylinder, or prism, with any desired cross section.

15. The structure according to any of claims 1 to 14, wherein the structure (1) comprises, in the direction of impact, at least two layers (23, 27 and 33), each of which has different compressibility properties and different failure properties.

## Revendications

1. Structure (1) destinée à absorber l'énergie de chocs qu'elle subit, dans laquelle la structure est déformable plastiquement et peut éventuellement être au moins partiellement détruite par un choc, dans laquelle la structure (1) présente des nervures (13) s'étendant en direction axiale, dans laquelle les nervures (13) s'étendent essentiellement sous forme ondulée ou en zigzag, et la structure (1) présente au moins une nervure (15), qui s'étend en direction axiale dans un premier plan et qui est attachée à au moins deux nervures (11) s'étendant en direction axiale dans un deuxième plan, qui est tourné par rapport au premier plan, **caractérisée en ce que** la structure (1) présente des nervures (7) de renforcement, dans laquelle les nervures (7) sont disposées l'une par rapport à l'autre sous un angle (α) par rapport à la direction axiale d'une manière telle que, en cas de défaillance d'une nervure (7), une force agissant sur la structure (1) en direction axiale soit déjà reprise par une autre nervure (7).

2. Structure selon la revendication 1, **caractérisée en ce que** les nervures (11) sont réalisées avec une hauteur croissante (h) en direction axiale.

3. Structure selon la revendication 1 ou 2, **caractérisée en ce que** les dimensions de la structure (1) augmentent en direction axiale.

4. Structure selon l'une quelconque des revendications 1 à 3, **caractérisée en ce que** la nervure (15) s'étendant en direction axiale dans le premier plan est attachée auxdites au moins deux nervures (3, 11) s'étendant en direction axiale dans le deuxième plan, d'une manière telle que les nervures (3, 11) s'étendant en direction axiale dans le deuxième plan soient saillantes au-dessus et en dessous de la nervure (15) s'étendant en direction axiale dans le premier plan.

5. Structure selon l'une quelconque des revendications 1 à 4, **caractérisée en ce que** la structure comprend au moins deux nervures (15, 17, 19) s'étendant en direction axiale dans des plans parallèles l'un à l'autre, dans laquelle lesdites au moins deux nervures (15, 17, 19) s'étendant dans des plans parallèles l'un à l'autre sont respectivement attachées à deux nervures (3, 11) s'étendant dans un plan tourné par rapport à ceux-ci.

6. Structure selon la revendication 5, **caractérisée en ce que** deux nervures (15, 17, 19) s'étendant dans des plans parallèles l'un à l'autre sont respectivement attachées sur des côtés différents à une nervure (3, 11) s'étendant dans un plan tourné par rapport à ceux-ci.

7. Structure selon l'une quelconque des revendications 1 à 6, **caractérisée en ce que** la structure est fabriquée en un matériau polymère.

8. Structure selon l'une quelconque des revendications 1 à 7, **caractérisée en ce que** le matériau polymère est renforcé.

9. Structure selon la revendication 8, **caractérisée en ce que** le matériau polymère contient comme renforcement des fibres courtes.

10. Structure selon la revendication 9, **caractérisée en ce que** les fibres courtes sont des fibres de verre, des fibres de carbone, des fibres d'aramide, des fibres de bore, des fibres métalliques ou des fibres de titanate de potassium.

11. Structure selon l'une quelconque des revendications 1 à 10, **caractérisée en ce que**, sur le côté où le choc agit sur la structure, est formé un tampon (35) qui recouvre au moins la section transversale de la structure (1).

12. Structure selon la revendication 11, **caractérisée en ce que** le tampon (35) est fabriqué en un matériau polymère ou un métal.

13. Structure selon la revendication 12, **caractérisée en ce que** le tampon (35) est fabriqué dans le même matériau que la structure (1).

14. Structure selon l'une quelconque des revendications 11 à 13, **caractérisée en ce que** le tampon (35) est réalisé sous la forme d'un parallélépipède, d'un cylindre ou d'un prisme de section transversale quelconque.

15. Structure selon l'une quelconque des revendications 1 à 14, **caractérisée en ce que** la structure (1) comprend dans la direction du choc au moins deux couches (23, 27, 33), qui présentent respectivement des propriétés de déformabilité différentes et un comportement de défaillance différent.
